# FASCICULE DE BREVET EUROPEEN

(11) **EP 4 059 468 B1**
(45) Date de publication et mention de la délivrance du brevet: **09.08.2023**
(21) Numéro de dépôt: 21162980.3
(22) Date de dépôt: 16.03.2021
(51) Int. Cl.: A61C 8/00, A61C 13/08

(54) **DISPOSITIF D'AIDE À L'USINAGE D'UNE ÉBAUCHE DE PROTHÈSE DENTAIRE**
HILFSVORRICHTUNG FÜR DIE BEARBEITUNG EINES ZAHNPROTHESENROHLINGS
DEVICE TO ASSIST WITH THE MACHINING OF A DENTAL PROSTHESIS BLANK

(43) Date de publication de la demande: 21.09.2022
(73) Titulaire: ANTHOGYR, 74700 Sallanches (FR)
(72) Inventeur: RICHARD, Hervé, 73590 NOTRE DAME DE BELLECOMBE (FR)
(74) Mandataire: Cabinet Poncet

(56) Documents cités:
- WO-A1-2019/063127
- US-A1- 2019 021 824
- US-A1- 2019 076 220
- US-A1- 2020 289 243

## Description

### DOMAINE TECHNIQUE DE L'INVENTION

La présente invention concerne le domaine dentaire, et concerne plus particulièrement le domaine de la restauration dentaire au moyen d'une prothèse dentaire fabriquée par usinage dans une matière telle que de la céramique (éventuellement pré-frittée).

Comme le décrivent les documents EP 2 053 985 B1, EP 3 202 365 B1, EP 3 573 568 B1 et EP 3 573 569 B1, on a parfois recours à une prothèse dentaire comportant :
- un premier tronçon de passage s'étendant depuis une extrémité proximale de ladite prothèse dentaire selon un premier axe longitudinal,
- un deuxième tronçon de passage, ledit deuxième tronçon de passage prolongeant en oblique le premier tronçon de passage de telle sorte que les premier et deuxième tronçons de passage forment entre eux un angle non nul.

Dans le document EP 2 053 985 B1, le passage traversant angulé constitué par les premier et deuxième tronçons de passage permet de faire passer une vis de fixation depuis le premier tronçon de passage jusqu'au deuxième tronçon de passage, puis un outil de vissage (tel que par exemple décrit dans le document EP 2 607 722 A1) est introduit dans le deuxième tronçon de passage pour atteindre la tête de vis de façon angulée et l'entraîner en rotation pour la visser dans un implant dentaire.

Dans les documents EP 3 202 365 B1, EP 3 573 568 B1 et EP 3 573 569 B1, la tête de la vis de fixation est introduite dans le premier tronçon de passage, puis un outil de vissage (tel que par exemple décrit dans le document EP 2 607 722 A1) est introduit dans le deuxième tronçon de passage pour atteindre la tête de vis de façon angulée et l'entraîner en rotation pour la visser dans un implant dentaire. Le deuxième tronçon de passage peut ainsi présenter une section transversale plus réduite que dans le document EP 2 053 985 B1, tout juste suffisante pour le passage de l'outil de vissage qui vient en prise dans l'empreinte femelle de la tête de la vis de fixatior

Le document US2019/076220 A1 concerne une prothèse dentaire avec un alésage intérieur coudé, formé par un premier trou et un deuxième trou reliés par une zone de connexion coudée formée avec un angle compris entre 0° et 180 °. Une zone externe et des zones latérales de la zone de raccordement coudée forment un coude dépourvu de bords saillants dirigés vers l'intérieur de l'alésage interne (2).

Dans tous les cas, le caractère angulé du passage traversant permet de disposer l'émergence coronaire (orifice) du deuxième tronçon de passage à l'écart des parties actives de la dent lors de la mastication (cuspides ou bord libre).

Dans tous les cas, si la réalisation du premier tronçon de passage ne présente guère de difficultés à usiner, un usinage du deuxième tronçon de passage pour aboutir à un passage traversant angulé reste compliqué. En effet, les machines numériques utilisées par les laboratoires de prothèses dentaires ne permettent pas toutes de réaliser le deuxième tronçon de passage, soit par manque d'axes de liberté, soit pas manque d'outils adaptés, soit encore pour des raisons liées aux logiciels pilotant lesdites machines numériques.

### EXPOSE DE L'INVENTION

L'invention est définie par les revendications.

Un problème proposé par la présente invention est de fournir un dispositif permettant à un prothésiste d'usiner de façon simple et fiable un passage traversant angulé dans une ébauche de prothèse dentaire.

Pour atteindre ces objets ainsi que d'autres, l'invention propose un dispositif d'aide à l'usinage par enlèvement de matière dans une ébauche de prothèse dentaire ayant une extrémité proximale, ledit dispositif comportant :
- un bâti,
- des moyens de tenue de l'extrémité proximale de l'ébauche de prothèse dentaire orientée selon un axe de tenue, lesdits moyens de tenue comportant une surface d'appui axial destinée à recevoir en appui axial l'extrémité proximale de l'ébauche de prothèse dentaire,
- des moyens de guidage aptes à tenir un outil de fraisage rotatif orienté selon un axe de fraisage,
dans lequel :
- les moyens de guidage autorisent un déplacement de l'outil de fraisage en translation selon l'axe de fraisage au moyen d'un coulisseau déplaçable entre une position distale et au moins une position limite proximale dans laquelle le coulisseau est plus proche de l'axe de tenue et de la surface d'appui axial des moyens de tenue qu'en position distale,
- les moyens de guidage autorisent un pivotement angulaire de l'axe de fraisage par rapport à l'axe de tenue,
- les moyens de guidage limitent ledit pivotement angulaire entre un angle maximum et un angle minimum par rapport à l'axe de tenue,
- les moyens de guidage sont conformés de telle sorte que, lorsque l'angle de pivotement angulaire de l'axe de fraisage par rapport à l'axe de tenue diminue, la position limite proximale du coulisseau se rapproche de l'axe de tenue et de la surface d'appui axial des moyens de tenue.

Un tel dispositif peut être utilisé pour usiner un deuxième tronçon de passage dans une ébauche de prothèse (en particulier en céramique pré-frittée, qui est aisément usinable) comportant un premier tronçon de passage s'allongeant selon un premier axe longitudinal, et qui est orientée avec le premier axe longitudinal coïncidant avec l'axe de tenue.

Grâce à ses moyens de guidage, le dispositif permet au prothésiste dentaire d'effectuer l'usinage du deuxième tronçon de passage avec fiabilité et facilité : en déplaçant l'outil de fraisage à l'intérieur des limites fixées par le pivotement angulaire limité et contraint auquel est asservie automatiquement la limite proximale du déplacement en translation du coulisseau, le prothésiste procède au retrait par fraisage de la seule partie de la matière constitutive de l'ébauche de prothèse permettant de réaliser le deuxième tronçon de passage, sans risquer d'enlever de la matière excédentaire.

Avantageusement, on peut prévoir que :
- les moyens de guidage comportent un levier, articulé à pivotement sur le bâti selon un premier axe de pivotement, et sur lequel le coulisseau est monté à coulissement,
- les moyens de tenue sont montés à pivotement sur le bâti selon un deuxième axe de pivotement parallèle au premier axe de pivotement mais distinct du premier axe de pivotement,
- des moyens de blocage permettent d'immobiliser les moyens de tenue par rapport au bâti.

Le pivotement des moyens de tenue et leur blocage permettent de régler aisément un angle entre l'axe de fraisage et l'axe de tenue (qui coïncide avec la première direction longitudinale selon laquelle s'allonge le premier tronçon de passage). Le pivotement angulaire limité de l'axe de fraisage se fera par rapport à ce premier angle ménagé entre l'axe de fraisage et l'axe de tenue.

De préférence, on peut prévoir que :
- le pivotement angulaire de l'axe de fraisage est limité par une première butée fixe du bâti contre laquelle le levier vient en appui selon un angle de pivotement minimum,
- le pivotement angulaire de l'axe de fraisage est limité par une deuxième butée portée par les moyens de tenue, excentrée par rapport au deuxième axe de pivotement, et contre laquelle le levier vient en appui selon un angle de pivotement maximum.

L'amplitude de pivotement limité du levier est ainsi fonction de l'angle entre l'axe de fraisage et l'axe de tenue.

A cet effet, on peut avantageusement prévoir que la deuxième butée est disposée à l'écart du deuxième axe de pivotement selon une distance inférieure à l'écart entre les premier et deuxième axes de pivotement.

De préférence, la position limite proximale du coulisseau peut être définie par une troisième butée portée par les moyens de tenue.

La position limite proximale du coulisseau, et donc la pénétration de l'outil de fraisage, dépend ainsi de l'orientation des moyens de tenue (donc de l'angle initialement réglé entre l'axe de fraisage et l'axe de tenue).

Avantageusement, le coulisseau peut comporter une tige ayant une extrémité libre destinée à venir porter en appui contre la troisième butée lorsque le coulisseau est en position limite proximale.

De préférence, l'extrémité libre de la tige peut avoir un profil en arc de cercle dans un plan perpendiculaire aux premier et deuxième axes de pivotement.

Ce profil en arc de cercle peut être identique au profil de l'extrémité libre de l'outil de fraisage (fraise hémisphérique), de sorte que la coopération prévue entre la tige et les moyens de tenue peut être reproduite entre l'ébauche de prothèse et l'outil de fraisage.

Avantageusement, on peut prévoir que la troisième butée comporte une facette :
- parallèle à l'axe de tenue,
- parallèle aux premier et deuxième axes de pivotement,
- située à l'écart de l'axe de tenue selon une distance égale au rayon de l'arc de cercle du profil de l'extrémité libre de la tige.

Pour une meilleure ergonomie lors l'utilisation du dispositif, des premiers moyens de rappel élastiques peuvent solliciter en permanence les moyens de guidage pour rappeler l'axe de fraisage à pivotement vers l'angle de pivotement minimum par rapport à l'axe de tenue.

Pour une meilleure ergonomie lors l'utilisation du dispositif, des deuxièmes moyens de rappel élastiques peuvent solliciter en permanence le coulisseau pour le rappeler vers sa position distale.

Avantageusement, les moyens de guidage peuvent comprendre un canon de perçage ayant un alésage interne destiné à recevoir à faible jeu radial l'outil de fraisage. Le canon de perçage permet d'orienter l'axe de fraisage de façon fiable et précise.

De préférence, les moyens de tenue peuvent comporter en outre une surface d'appui latéral, conformée pour recevoir en appui latéral l'ébauche de prothèse dentaire, vers et à l'écart de l'axe de tenue. On stabilise ainsi mieux l'ébauche de prothèse contre les couples de basculement que peut induire l'usinage.

Avantageusement, les moyens de tenue peuvent être conformés pour autoriser un réglage et un blocage en orientation angulaire de l'ébauche de prothèse autour de l'axe de tenue. Le praticien dispose ainsi d'une plus grande liberté pour disposer l'émergence coronaire (orifice) du deuxième tronçon de passage à l'écart des parties actives de la dent lors de la mastication (cuspides ou bord libre).

De préférence, les moyens de tenue peuvent comporter en outre un patin d'appui, destiné à venir en appui latéral contre l'ébauche de prothèse, ledit patin étant de préférence sollicité en permanence par des troisièmes moyens de rappel élastiques pour le rappeler vers l'axe de tenue. Outre le fait de stabiliser mieux l'ébauche de prothèse contre les couples de basculement que peut induire l'usinage, un tel patin peut de façon simple bloquer l'ébauche de prothèse en orientation angulaire autour de l'axe de tenue.

Selon un autre aspect de la présente invention, il est proposé un procédé d'usinage d'une ébauche de prothèse dentaire par enlèvement de matière à l'aide d'un dispositif tel que décrit précédemment, ladite ébauche de prothèse dentaire comportant un premier tronçon de passage s'étendant depuis une extrémité proximale de ladite ébauche de prothèse dentaire selon un premier axe longitudinal, procédé lors duquel :
a) on fixe l'ébauche de prothèse dentaire sur les moyens de tenue,
b) on adapte sur les moyens de guidage un outil de fraisage rotatif orienté selon l'axe de fraisage,
c) on déplace l'outil de fraisage en translation selon l'axe de fraisage et on fait pivoter l'axe de fraisage.

Un tel procédé est simple, rapide et fiable pour réaliser le deuxième tronçon de passage d'un passage traversant angulé dans une ébauche de prothèse.

Selon un autre aspect de la présente invention, il est proposé l'utilisation d'un dispositif d'aide à l'usinage tel que décrit précédemment pour l'usinage d'une ébauche de prothèse dentaire par enlèvement de matière, ladite ébauche de prothèse dentaire comportant un premier tronçon de passage s'étendant depuis une extrémité proximale de ladite ébauche de prothèse dentaire selon un premier axe longitudinal, utilisation lors de laquelle on usine dans l'ébauche de prothèse dentaire, au moyen d'un outil de fraisage, un deuxième tronçon de passage, ledit deuxième tronçon de passage prolongeant en oblique le premier tronçon de passage de telle sorte que les premier et deuxième tronçons de passage forment entre eux un angle non nul.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en coupe longitudinale d'une ébauche de prothèse dentaire avant usinage au moyen d'un dispositif d'aide à l'usinage selon la présente invention ;
[Fig.2] La figure 2 est une vue en coupe longitudinale d'une ébauche de prothèse dentaire après usinage au moyen d'un dispositif d'aide à l'usinage selon la présente invention ;
[Fig.3] La figure 3 est une vue en perspective d'un dispositif d'aide à l'usinage selon un premier mode de réalisation de l'invention ;
[Fig.4] La figure 4 est une vue de face d'une partie des éléments constitutifs du dispositif d'aide à l'usinage de la figure 3 ;
[Fig.5] La figure 5 est une vue en coupe longitudinale d'une partie des éléments constitutifs du dispositif d'aide à l'usinage de la figure 3 ;
[Fig.6] La figure 6 est une vue en perspective du dispositif d'aide à l'usinage de la figure 3 lors d'une première étape d'usinage d'une ébauche de prothèse dentaire ;
[Fig.7] La figure 7 est une vue de face d'une partie des éléments constitutifs du dispositif d'aide à l'usinage de la figure 6 ;
[Fig.8] La figure 8 est une vue en perspective du dispositif d'aide à l'usinage de la figure 3 lors d'une deuxième étape d'usinage d'une ébauche de prothèse dentaire ;
[Fig.9] La figure 9 est une vue de face d'une partie des éléments constitutifs du dispositif d'aide à l'usinage de la figure 8 ;
[Fig. 10] La figure 10 est une vue en perspective et de détail du dispositif d'aide à l'usinage de la figure 8, sur laquelle a été occultée l'ébauche de prothèse dentaire ;
[Fig.11] La figure 11 est une vue en coupe longitudinale illustrant la position relative de l'outil de fraisage et de l'ébauche de prothèse dentaire lors de la deuxième étape d'usinage de la figure 8 ;
[Fig.12] La figure 12 est une vue en perspective du dispositif d'aide à l'usinage de la figure 3 lors d'une troisième étape d'usinage d'une ébauche de prothèse dentaire ;
[Fig. 13] La figure 13 est une vue en perspective et de détail du dispositif d'aide à l'usinage de la figure 12, sur laquelle a été occultée l'ébauche de prothèse dentaire ;
[Fig. 14] La figure 14 est une vue de face du dispositif d'aide à l'usinage de la figure 12, sur laquelle a été occultée l'ébauche de prothèse dentaire ;
[Fig. 15] La figure 15 est une vue en coupe longitudinale illustrant la position relative de l'outil de fraisage et de l'ébauche de prothèse dentaire lors de la troisième étape d'usinage de la figure 12 ;
[Fig.16] La figure 16 est une vue en perspective du dispositif d'aide à l'usinage de la figure 3 lors d'une quatrième étape d'usinage d'une ébauche de prothèse dentaire ;
[Fig. 17] La figure 17 est une vue de face d'une partie des éléments constitutifs du dispositif d'aide à l'usinage de la figure 16 ;
[Fig. 18] La figure 18 est une vue en perspective et de détail du dispositif d'aide à l'usinage de la figure 16, sur laquelle a été occultée l'ébauche de prothèse dentaire ;
[Fig. 19] La figure 19 est une vue en coupe longitudinale illustrant la position relative de l'outil de fraisage et de l'ébauche de prothèse dentaire lors de la troisième étape d'usinage de la figure 16.

### DESCRIPTION DES MODES DE REALISATION PREFERES

Lorsque des références numériques identiques sont utilisées dans plusieurs figures, variantes ou modes de réalisation de l'invention, ces références numériques désignent des éléments identiques ou similaires dans chacune des figures, chacune des variantes ou chacun des modes de réalisation.

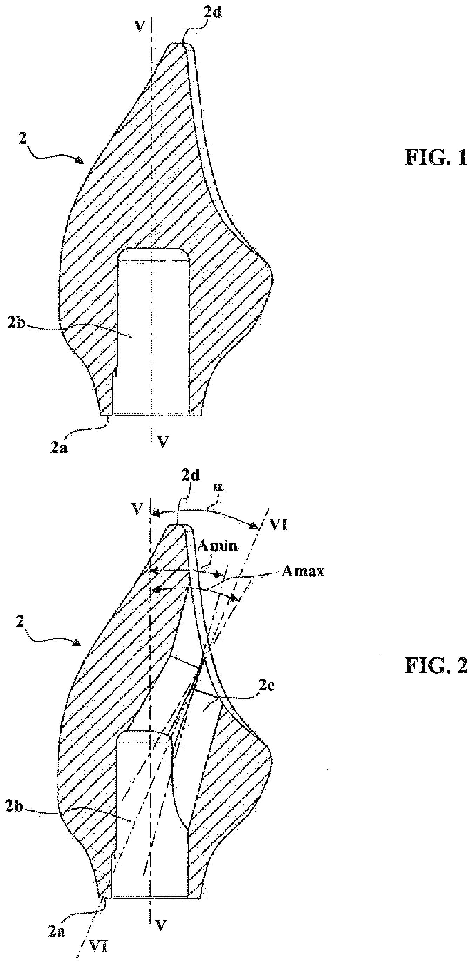

Sur la figure 1 est illustrée en coupe longitudinale une ébauche de prothèse dentaire 2 avant usinage au moyen d'un dispositif 1 d'aide à l'usinage selon la présente invention. Cette ébauche de prothèse dentaire 2 comporte une extrémité proximale 2a et un premier tronçon de passage 2b s'étendant depuis l'extrémité proximale 2a selon un premier axe longitudinal V-V.

On souhaite réaliser dans l'ébauche de prothèse dentaire 2 un deuxième tronçon de passage 2c pour parvenir à l'ébauche de prothèse dentaire 2 de la figure 2, dans laquelle le deuxième tronçon de passage 2c prolonge en oblique le premier tronçon de passage 2b de telle sorte que les premier 2b et deuxième 2c tronçons de passage forment entre eux un angle α non nul.

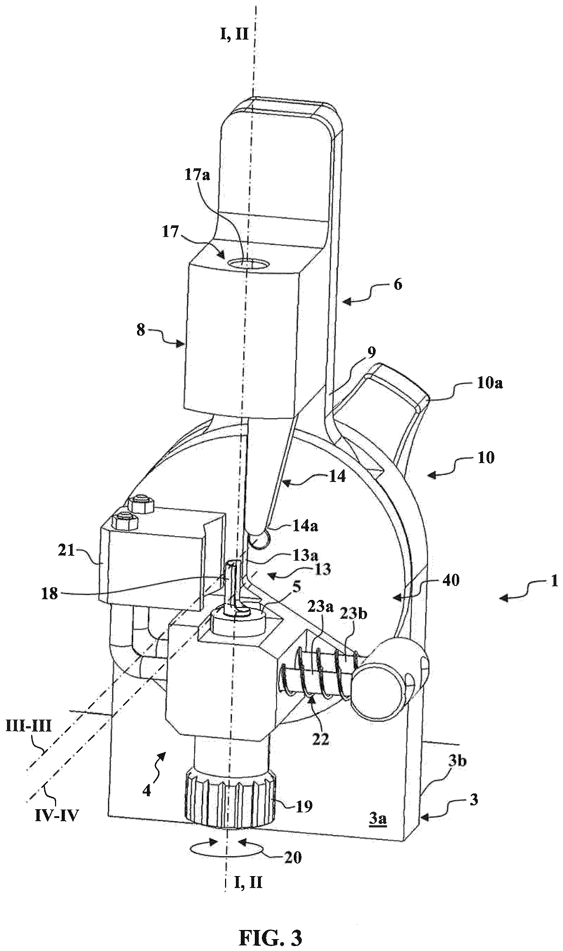

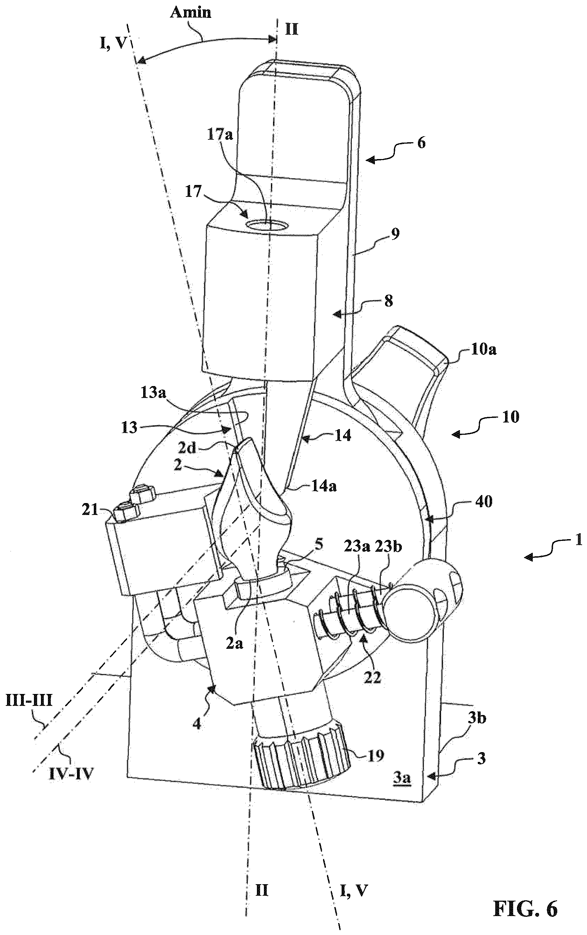

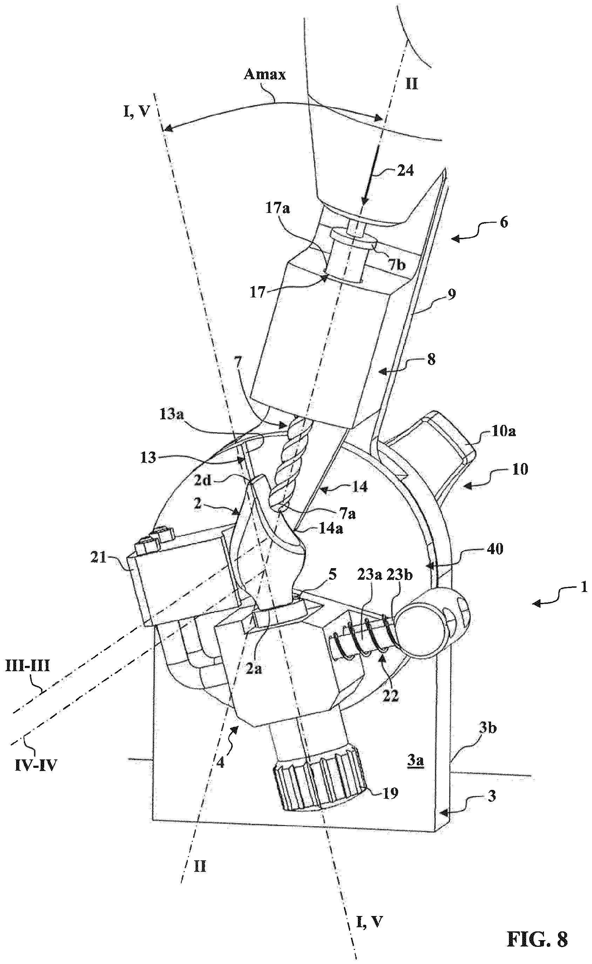

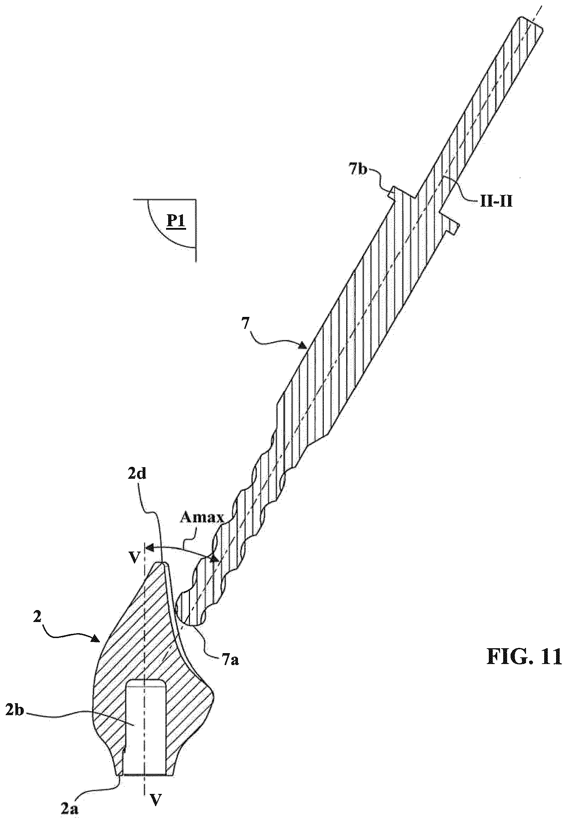

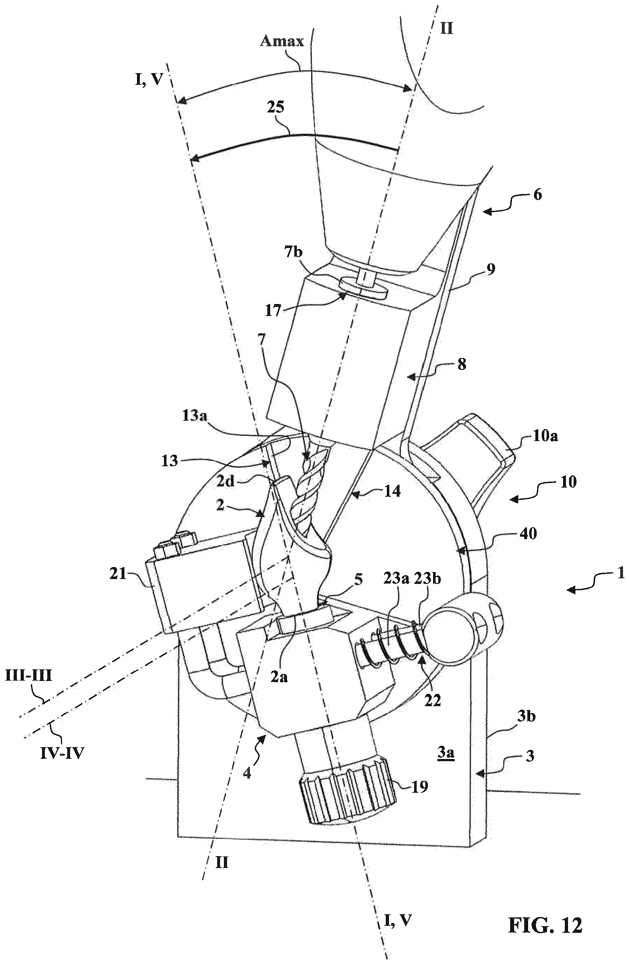

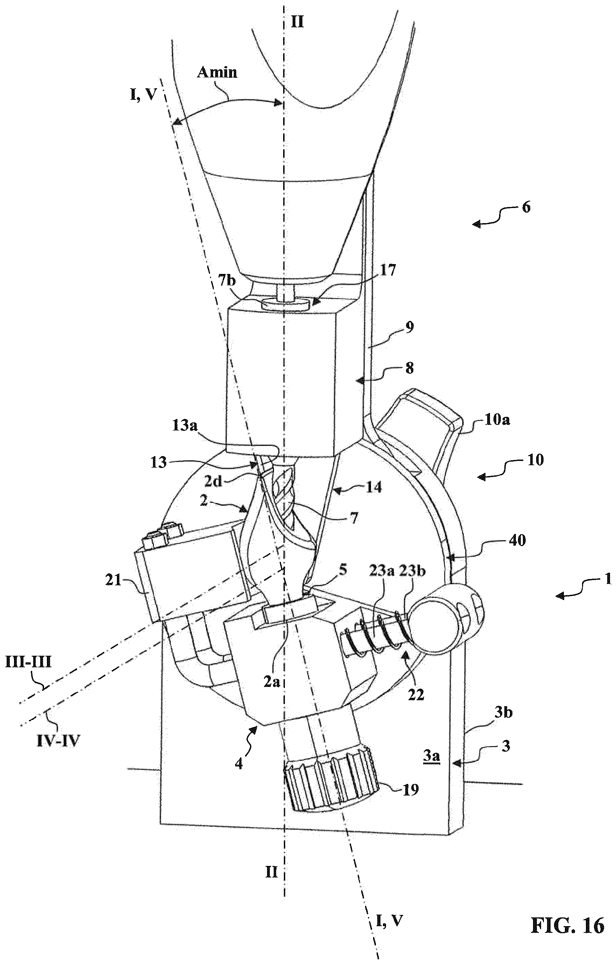

Sur les figures 3 à 10, 12 à 14 et 16 à 18 est illustré un exemple de dispositif 1 selon l'invention, pour l'aide à l'usinage par enlèvement de matière dans l'ébauche de prothèse dentaire 2 (figure 1). Le dispositif 1 comporte :
- un bâti 3,
- des moyens de tenue 4 de l'extrémité proximale 2a de l'ébauche de prothèse dentaire 2 orientée selon un axe de tenue I-I, les moyens de tenue 4 comportant une surface d'appui axial 5 destinée à recevoir en appui axial l'extrémité proximale 2a de l'ébauche de prothèse dentaire 2,
- des moyens de guidage 6 aptes à tenir un outil de fraisage 7 (figure 8 notamment) rotatif orienté selon un axe de fraisage II-II (qui coïncide avec l'axe de tenue I-I sur la figure 3),
dans lequel :
- les moyens de guidage 6 autorisent un déplacement de l'outil de fraisage 7 en translation selon l'axe de fraisage II-II au moyen d'un coulisseau 8 déplaçable entre une position distale (figures 3, 6, 8 et 10) et au moins une position limite proximale (figures 12 et 16) dans laquelle le coulisseau 8 est plus proche de l'axe de tenue I-I et de la surface d'appui axial 5 des moyens de tenue 4 qu'en position distale (figures 3, 6, 8 et 10),
- les moyens de guidage 6 autorisent un pivotement angulaire de l'axe de fraisage II-II par rapport à l'axe de tenue I-I,
- les moyens de guidage 6 limitent ledit pivotement angulaire entre un angle maximum Amax (figures 8 à 15) et un angle minimum Amin (figures 6, 7 et 16 à 19) par rapport à l'axe de tenue I-I,
- les moyens de guidage 6 sont conformés de telle sorte que, lorsque l'angle de pivotement angulaire de l'axe de fraisage II-II par rapport à l'axe de tenue I-I diminue, la position limite proximale du coulisseau 8 se rapproche de l'axe de tenue I-I et de la surface d'appui axial 5 des moyens de tenue 4.

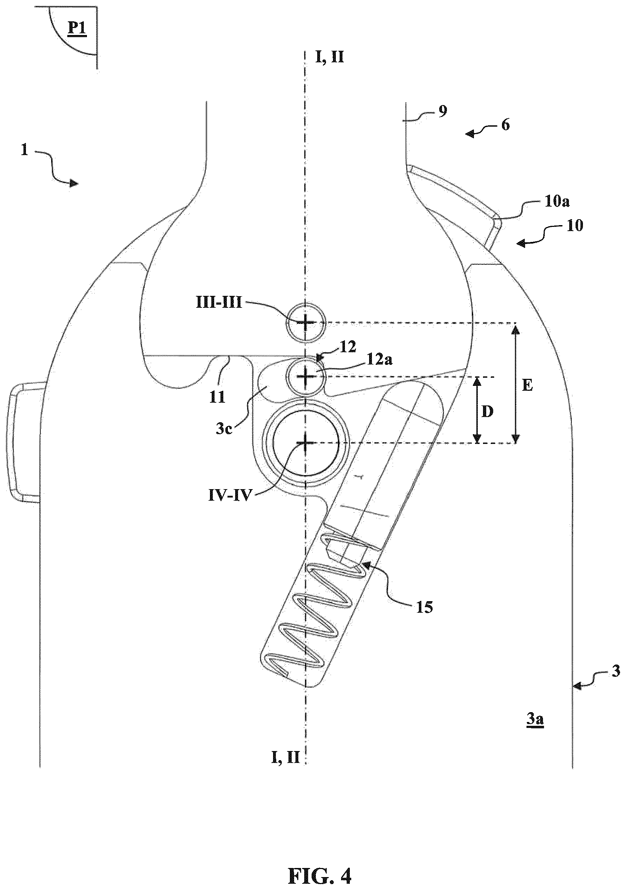

De façon plus précise et comme plus particulièrement illustré sur la figure 3 et sur la figure 4 (sur laquelle les moyens de tenue 4 ont en partie été occultés pour favoriser la compréhension du lecteur) :
- les moyens de guidage 6 comportent un levier 9, articulé à pivotement sur le bâti 3 selon un premier axe de pivotement III-III, et sur lequel le coulisseau 8 est monté à coulissement,
- les moyens de tenue 4 sont montés à pivotement sur le bâti 3 selon un deuxième axe de pivotement IV-IV parallèle au premier axe de pivotement II-III mais distinct du premier axe de pivotement III-III.

Des moyens de blocage 10 permettent d'immobiliser les moyens de tenue 4 par rapport au bâti 3. De façon concrète, le corps de tenue 40 des moyens de tenue 4 peut être plaqué contre une première face 3a du bâti 3 par serrage d'un écrou (à bouton de manoeuvre 10a à trois branches) venant en appui sur la deuxième face 3b du bâti 3, qui est opposée à la première face 3a.

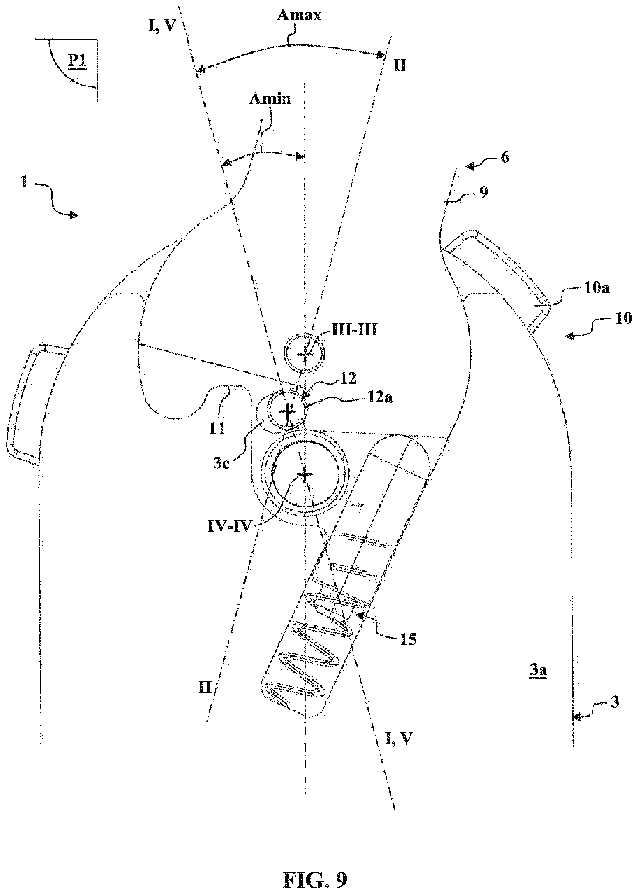

On voit plus particulièrement sur les figures 4, 7 et 17 que le pivotement angulaire de l'axe de fraisage II-II est limité par une première butée 11 fixe du bâti 3 contre laquelle le levier 9 vient en appui selon un angle de pivotement minimum Amin. Le pivotement angulaire de l'axe de fraisage II-II est limité par une deuxième butée 12 portée par les moyens de tenue 4, excentrée par rapport au deuxième axe de pivotement IV-IV, et contre laquelle le levier 9 vient en appui selon un angle de pivotement maximum Amax (figures 4 et 9).

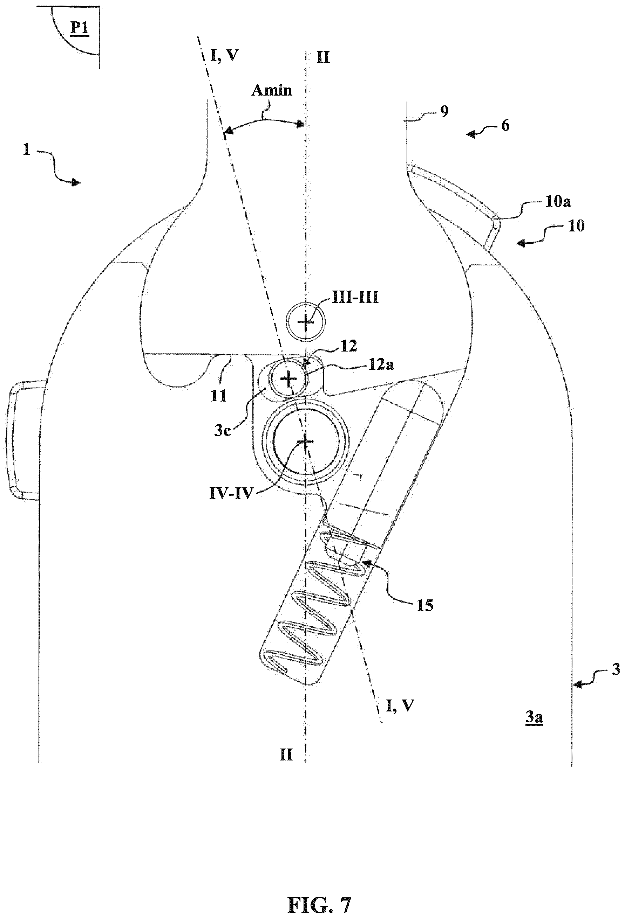

De façon plus détaillée, la deuxième butée 12 comprend un ergot 12a solidaire des moyens de tenue 4. Lorsque les moyens de tenue 4 pivotent autour du deuxième axe de pivotement IV-IV, l'ergot 12a se déplace dans un chemin 3c en arc de cercle ménagé dans le bâti 3 (voir notamment par comparaison des figures 4 et 7).

Sur la figure 7, le levier 9 est simultanément en appui contre la première butée 11 et la deuxième butée 12, de sorte que le levier 9 ne peut pas être pivoté autour du premier axe de pivotement III-III. Par comparaison, le pivotement des moyens de tenue 4 (figures 6, 7 et 17) permet d'amener la deuxième butée 12 dans une position qui autorise un pivotement du levier 9 (figures 8 et 9 en particulier).

On observe plus particulièrement sur la figure 4 que la deuxième butée 12 est disposée à l'écart du deuxième axe de pivotement IV-IV selon une distance D inférieure à l'écart E entre les premier III-III et deuxième IV-IV axes de pivotement (les distance D et écart E sont pris selon la direction définie par les premier III-III et deuxième IV-IV axes de pivotement).

Sur les figures 4, 7, 9 et 17, on voit que des premiers moyens de rappel élastiques 15 sollicitent en permanence les moyens de guidage 6 (et plus particulièrement le levier 9) pour rappeler l'axe de fraisage II-II à pivotement vers l'angle de pivotement minimum Amin par rapport à l'axe de tenue I-I. En pratique, les premiers moyens de rappel élastiques 15 rappellent en permanence le levier 9 vers la première butée 11.

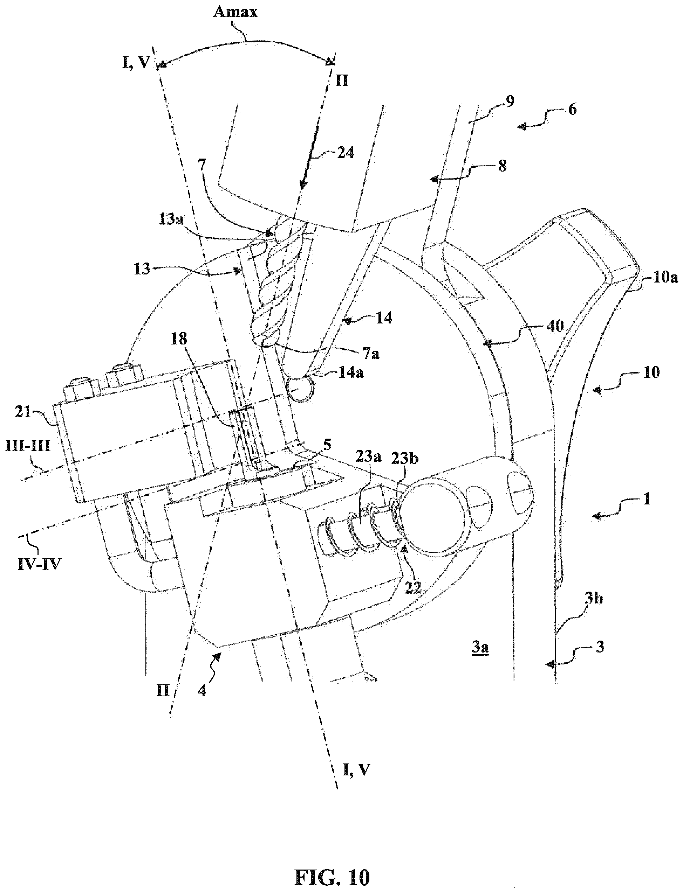

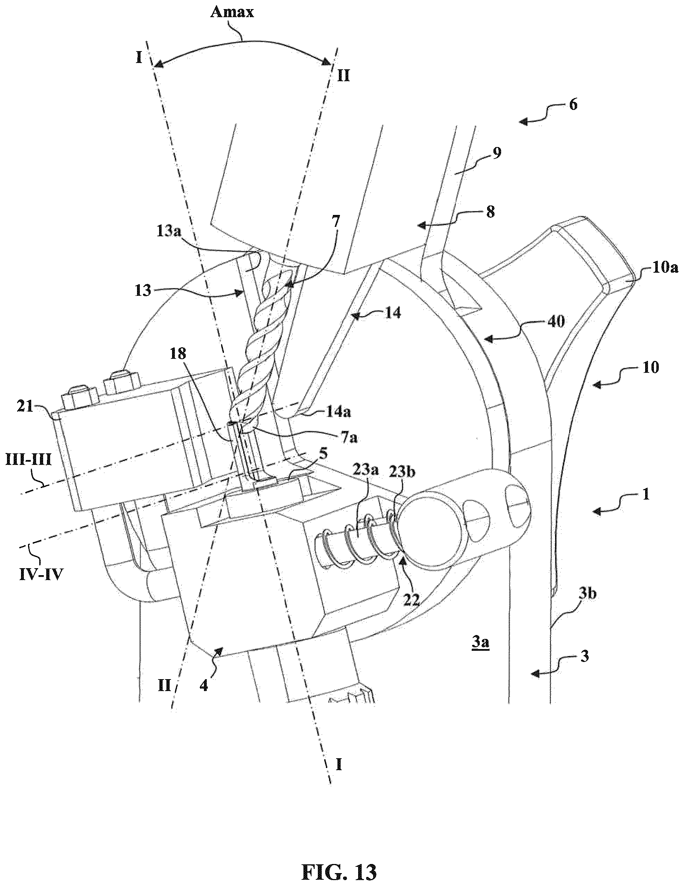

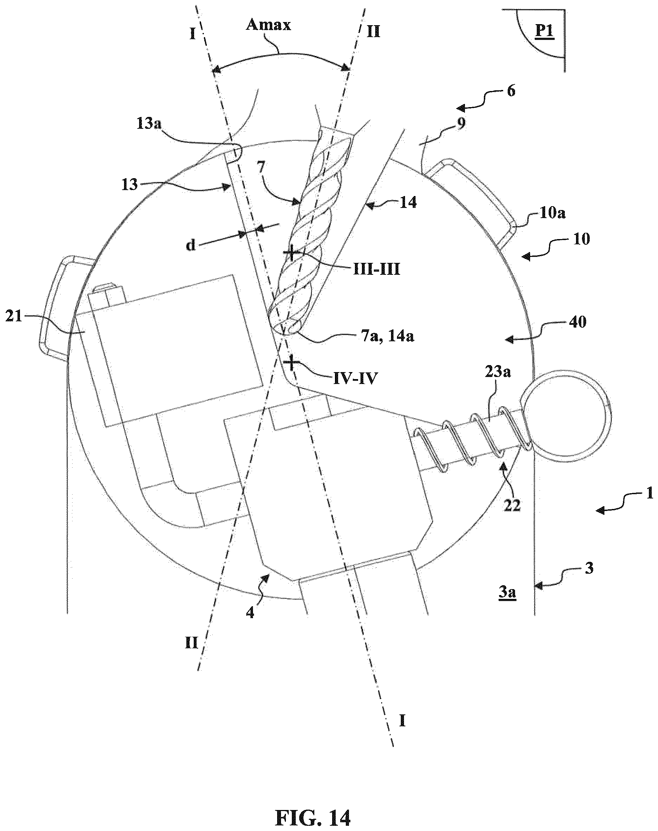

La position limite proximale du coulisseau 8 est définie par une troisième butée 13 portée par les moyens de tenue 4. Cette troisième butée 13, plus particulièrement visible sur les figures 10 et 13, comporte une facette 13a qui est :
- parallèle à l'axe de tenue I-I,
- parallèle aux premier III-III et deuxième IV-IV axes de pivotement,
- située à l'écart de l'axe de tenue I-I selon une distance d égale au rayon de l'arc de cercle du profil de l'extrémité libre 14a de la tige 14 (dans le plan P1 perpendiculaire aux premier III-III et deuxième IV-IV axes de pivotement, comme illustré sur la figure 14).

Le coulisseau 8 comporte une tige 14 ayant une extrémité libre 14a destinée à venir porter en appui contre la facette 13a de la troisième butée 13 lorsque le coulisseau 8 est en position limite proximale (figures 13 et 14).

On voit plus particulièrement sur les figures 13 et 14 que l'extrémité libre 14a de la tige 14 a un profil en arc de cercle dans le plan P1 perpendiculaire aux premier III-III et deuxième IV-IV axes de pivotement. Ce profil en arc de cercle correspond avec précision au profil de l'extrémité libre 7a de l'outil de fraisage 7 qui est avantageusement une fraise hémisphérique. En d'autres termes la tige 14 a un profil en arc de cercle dont le rayon est égal au rayon de l'extrémité libre 7a de l'outil de fraisage 7.

Lorsque le coulisseau 8 est en position limite proximale (figures 13 et 14), le profil en arc de cercle de l'extrémité libre 14a de la tige 14 est en correspondance avec le profil en arc de cercle de l'extrémité libre 7a de l'outil de fraisage 7. L'appui de la tige 14 contre la troisième butée 13 permet ainsi de maîtriser avec précision la position de l'extrémité libre 7a de l'outil de fraisage 7 par rapport aux moyens de tenue 4 (et donc par rapport à l'ébauche de prothèse dentaire 2 que sont destinés à porter les moyens de tenue 4).

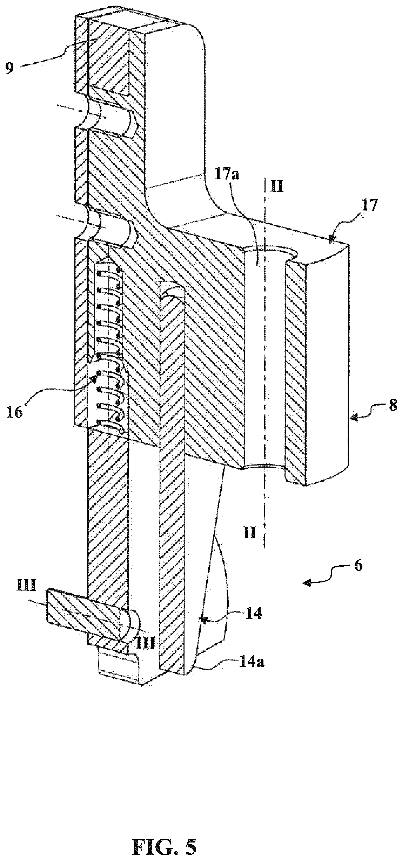

On voit plus particulièrement sur la figure 5 que des deuxièmes moyens de rappel élastiques 16 sollicitent en permanence le coulisseau 8 pour le rappeler vers sa position distale.

Sur cette même figure 5, on voit plus précisément que les moyens de guidage 6 comprennent un canon de perçage 17 ayant un alésage interne 17a destiné à recevoir à faible jeu l'outil de fraisage 7. En pratique, l'alésage interne17a présente un diamètre lui permettant de recevoir l'outil de fraisage 7 à faible jeu radial de façon à tenir l'outil de fraisage 7 selon l'axe de fraisage II-II, tout en autorisant son coulissement à l'intérieur du canon de perçage 17 jusqu'à une pénétration maximale limitée par un épaulement 7b (figure 8).

Sur la figure 3, on voit que les moyens de tenue 4 comportent en outre une surface d'appui latéral 18, conformée pour recevoir en appui latéral l'ébauche de prothèse dentaire 2, vers et à l'écart de l'axe de tenue I-I. En pratique, la surface d'appui latéral 18 présente une forme semi tubulaire destinée à être reçue par emmanchement à faible jeu (radial) dans le premier tronçon de passage 2b de l'ébauche de prothèse 2.

Les moyens de tenue 4 sont également conformés pour autoriser un réglage et un blocage en orientation angulaire de l'ébauche de prothèse 2 autour de l'axe de tenue I-I. Pour ce faire, la surface d'appui latérale 18 est solidaire d'un bouton 19 qui peut être pivoté autour de l'axe de tenue I-I, comme illustré par la double flèche 20. Les moyens de tenue 4 comportent en outre un patin d'appui 21, destiné à venir en appui latéral contre l'ébauche de prothèse 2. Le patin d'appui 21 est ici sollicité en permanence par des troisièmes moyens de rappel élastiques 22 pour le rappeler vers l'axe de tenue I-I.

De façon plus détaillée, le patin d'appui 21 est porté par deux tiges 23a et 23b coulissant à travers un corps de tenue 40 des moyens de tenue 4 perpendiculairement à l'axe de tenue I-I.

Le dispositif 1 est destiné à être utilisé pour l'usinage de l'ébauche de prothèse dentaire 2 de la figure 1 par enlèvement de matière, ladite ébauche de prothèse dentaire 2 comportant un premier tronçon de passage 2b s'étendant depuis une extrémité proximale 2a de ladite ébauche de prothèse dentaire 2 selon un premier axe longitudinal V-V. Lors de cette utilisation, on usine dans l'ébauche de prothèse dentaire 2, au moyen de l'outil de fraisage 7, un deuxième tronçon de passage 2c, ledit deuxième tronçon de passage 2c prolongeant en oblique le premier tronçon de passage 2b de telle sorte que les premier 2b et deuxième 2c tronçons de passage forment entre eux un angle α non nul.

Une telle utilisation va désormais être explicitée étape par étape au moyen des figures.

Initialement, le prothésiste se trouve en possession de l'ébauche de prothèse 2 illustrée sur la figure 1 qu'il a fabriquée, et le dispositif 1 se trouve dans la configuration illustrée sur les figures 3 et 4. Le coulisseau 8 est en position distale. Le levier 9 ne peut pas encore être pivoté par rapport au bâti 3.

Pour plus de facilité à l'usiner lorsqu'elle est en céramique, l'ébauche de prothèse 2 peut se trouver à l'état de poudre céramique pré-frittée. Elle subira ensuite une étape de frittage après que le prothésiste ait usiné le deuxième tronçon de passage 2c avec le dispositif 1 selon la présente invention.

Pour commencer, le prothésiste rapporte l'ébauche de prothèse 2 sur les moyens de tenue 4. Pour ce faire, il déplace le patin d'appui 21 à l'écart de l'axe de tenue I-I (par compression des deux ressorts hélicoïdaux des troisièmes moyens de rappel élastiques 22) et il emmanche l'ébauche de prothèse 2 selon son premier tronçon de passage 2b sur la surface d'appui latéral 18 jusqu'à amener l'ébauche de prothèse 2 en appui selon son extrémité proximale 2a contre la surface d'appui axial 5. L'ébauche de prothèse 2 est alors tenue orientée avec le premier axe longitudinal V-V qui coïncide avec l'axe de tenue I-I.

Une fois emmanchée, l'ébauche de prothèse 2 est indexée en rotation autour de l'axe de tenue I-I par rapport à la surface d'appui latéral 18 (par coopération de formes par exemple entre le premier tronçon de passage 2b et la surface d'appui latéral 18). Le prothésiste peut ensuite éventuellement ajuster l'orientation de l'ébauche de prothèse 2 par rapport au corps de tenue 40 autour de l'axe de tenue I-I en faisant pivoter la surface d'appui latéral 18 par rapport au corps de tenue 40 en manipulant le bouton 19.

Le prothésiste relâche alors le patin d'appui 21 qui vient en appui latéral contre l'ébauche de prothèse dentaire 2. Cela a pour effet de fixer l'ébauche de prothèse dentaire 2 en rotation autour de l'axe de tenue I-I. Cet appui latéral permet aussi la reprise d'efforts induits ultérieurement par l'usinage, en particulier les couples de basculement autour d'une direction perpendiculaire à l'axe de tenue I-I.

Le prothésiste règle ensuite l'angle minimum Amin entre l'axe de tenue I-I et l'axe de fraisage II-II, en faisant pivoter le corps de tenue 40 des moyens de tenue autour du deuxième axe de pivotement IV-IV. Ici, il est par exemple choisi un angle Amin de 15 degrés. Le pivotement des moyens de tenue 4 déplace la deuxième butée 12 (ergot 12a) dans le chemin 3c en arc de cercle, jusqu'à obtenir l'angle Amin choisi par le prothésiste entre l'axe de tenue I-I et l'axe de fraisage II-II (figure 7). Le prothésiste immobilise alors les moyens de tenue 4 par rapport au bâti 3 au moyen du bouton de manoeuvre 10a des moyens de blocage 10.

On se trouve alors dans la configuration illustrée sur les figures 6 et 7. Les premiers moyens de rappel élastiques 15 maintiennent le levier 9 des moyens de guidage 6 en appui contre la première butée 11, et les deuxièmes moyens de rappel élastiques 16 maintiennent le coulisseau 8 en position distale.

Il est à noter que l'angle minimum Amin doit rester inférieur ou égal à l'angle maximal avec lequel l'outil de vissage (tel qu'illustré dans le document EP 2 607 722 A1) peut entraîner en rotation une vis. En pratique, il est préféré de choisir un angle Amin inférieur ou égal à 25 degrés. Un angle minimum Amin de 0 degré est obtenu lorsque l'ergot 12a est dans la position illustrée sur la figure 4 sur laquelle l'ergot 12a est à une extrémité du chemin circulaire 3c. Un angle minimum Amin de 25 degrés est obtenu lorsque l'ergot 12a est situé à l'autre extrémité du chemin circulaire 3c.

En pratique, on comprend que le prothésiste n'a pas à se préoccuper de la borne supérieure concernant l'angle minimum Amin : celle-ci est définie par la géométrie du dispositif 1, en particulier par la longueur du chemin circulaire 3c.

Le prothésiste engage alors l'outil de fraisage 7 dans le canon de perçage 17 portée par le coulisseau 8 (toujours en position distale) et peut approcher de l'ébauche de prothèse 2 l'extrémité libre 7a de l'outil de fraisage 7 pour apprécier si l'émergence coronaire (orifice) du deuxième tronçon de passage 2c est placée de façon satisfaisante par rapport aux parties actives de l'ébauche de prothèse dentaire 2 (cuspides ou bord libre 2d) lorsque l'axe de fraisage II-II fait un angle minimum Amin avec l'axe de tenue I-I.

L'outil de fraisage 7 comporte un épaulement 7b de diamètre supérieur au diamètre de l'alésage interne 17a du canon de perçage 17, définissant une pénétration maximale de l'outil de fraisage 7 dans le canon de perçage 17.

Le prothésiste fait alors pivoter le levier 9, à l'encontre des premiers moyens de rappel élastiques 15, pour disposer l'axe de fraisage II-II selon l'angle maximum Amax par rapport à l'axe de tenue I-I (figure 8 à 11). L'angle maximum Amax est défini par appui du levier 9 contre la deuxième butée 12 (figure 9). Ici, par construction géométrique du dispositif 1 (notamment par la distance D, l'écart E et la forme du levier 9), l'angle maximum Amax procuré par le choix effectué précédemment de l'angle minimum Amin est de 30 degrés.

En pratique, le prothésiste n'a à se préoccuper que de définir l'angle minimum Amin en considération des surfaces actives (cuspides ou bord libre 2d) de l'ébauche de prothèse dentaire 2 : l'angle maximum Amax est en effet automatiquement déterminé par la géométrie du dispositif 1. De bons résultats ont été obtenus en prévoyant une relation telle que :
- lorsque l'angle minimum Amin est choisi égal à 0 degré, l'angle maximum Amax est de 0 degrés,
- lorsque l'angle minimum Amin est choisi égal à 15 degrés, l'angle maximum Amax est de 30 degrés,
- lorsque l'angle minimum Amin est choisi égal à 25 degrés, l'angle maximum Amax est de 48 degrés.

Le prothésiste met ensuite en rotation l'outil de fraisage 7.

Le prothésiste déplace alors l'outil de fraisage 7 selon l'axe de fraisage II-II disposé selon l'angle maximum Amax. Dans un premier temps, l'outil de fraisage 7 commence à pénétrer dans la matière constitutive de l'ébauche de prothèse dentaire 2 (selon un mouvement schématisé par la flèche 24 sur la figure 8) sans que le coulisseau 8 se déplace à l'écart de sa position distale.

Puis l'épaulement 7b vient en appui contre l'orifice de l'alésage interne 17a du canon de perçage 17 : le profil en arc de cercle de l'extrémité libre 7a de l'outil de fraisage 7 coïncide alors avec le profil en arc de cercle de l'extrémité libre 14a de la tige 14.

La poursuite du déplacement en translation de l'outil de fraisage 7 (selon l'axe de fraisage II-II) vers l'axe de tenue I-I et de la surface d'appui axial 5 provoque un déplacement en translation du coulisseau 8 (mouvement schématisé par la flèche 24 sur la figure 8) vers sa position limite proximale correspondant à l'angle maximum Amax (illustrée sur les figures 12 à 15). A ce moment-là, l'extrémité libre 14a de la tige 14 se trouve en appui contre la facette 13a de la troisième butée 13. De son côté, l'extrémité libre 7a de l'outil de fraisage 7 vient « lécher » l'intérieur de la paroi semi-tubulaire de la surface d'appui latéral 18 (figure 13). Ainsi, l'appui de l'extrémité libre 14a de la tige 14 contre la facette 13a empêche l'outil de fraisage 7 de continuer à percer plus profondément l'ébauche de prothèse dentaire 2 selon l'angle maximum Amax.

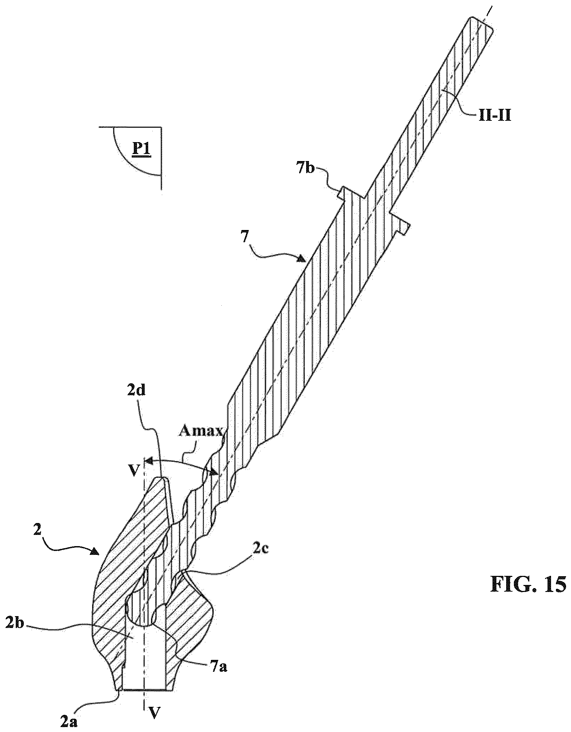

L'ébauche de prothèse dentaire 2 et l'outil de fraisage 7 se trouvent alors dans la configuration relative illustrée sur la figure 15. L'ébauche de prothèse dentaire 2 a été usinée par un fraisage purement axial (perçage) selon la direction de fraisage II-II.

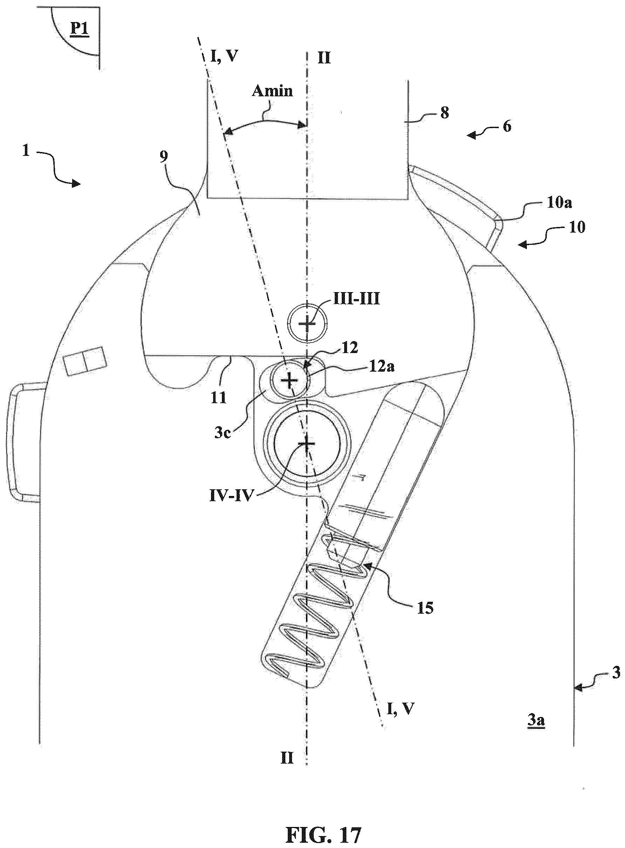

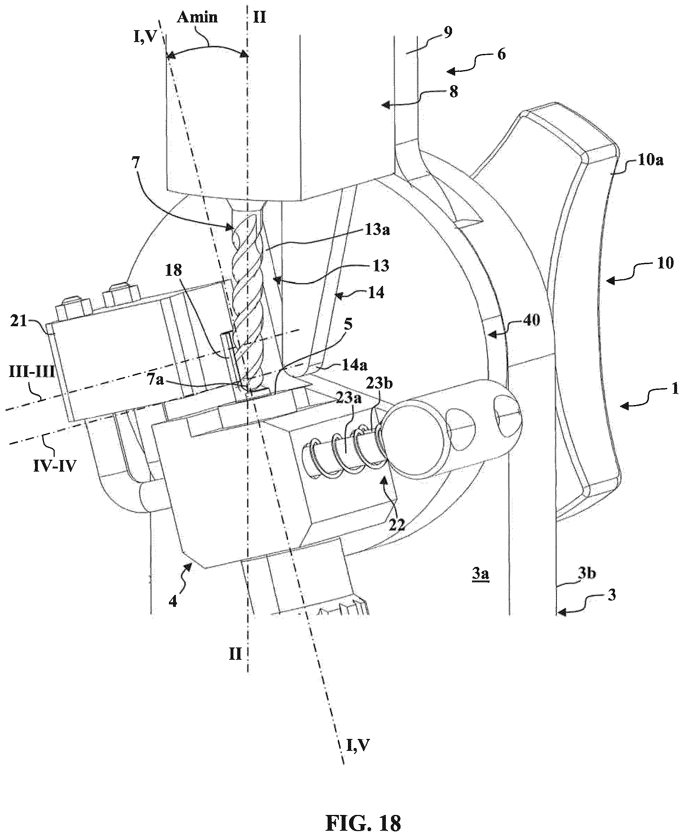

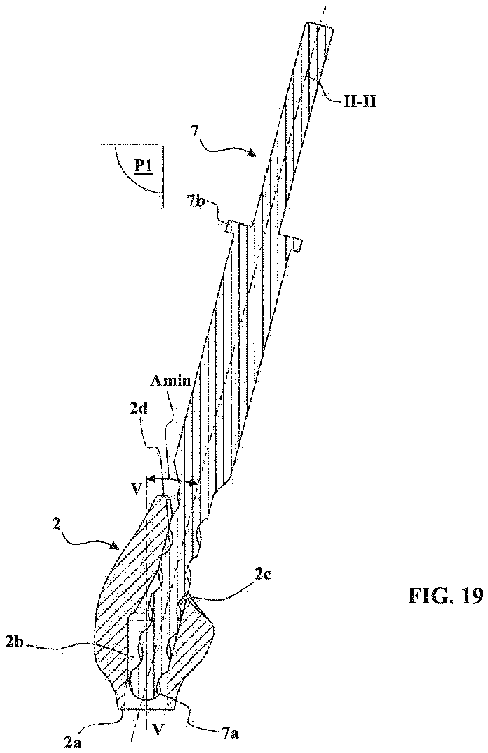

Le prothésiste, tout en maintenant un effort axial sur l'outil de fraisage 7 selon l'axe de fraisage II-II vers l'axe de tenue I-I (selon la flèche 24 illustrée sur la figure 12), applique ensuite sur l'outil de fraisage 7 un mouvement de basculement (flèche 25 sur la figure 12) visant à amener le levier 9 en appui contre la première butée 11 (figure 17) pour obtenir l'angle minimum Amin entre l'axe de tenue I-I et l'axe de fraisage II-II. Simultanément, l'extrémité libre 14a de la tige 14 glisse sur la facette 13a pour passer de la position illustrée sur les figures 13 et 14 à la position illustrée sur la figure 18, ce qui autorise un coulissement encore plus important du coulisseau 8 à l'écart de sa position distale. Le coulisseau 8 se déplace ainsi vers sa position limite proximale correspondant à l'angle minimum Amin : l'outil de fraisage 7 pénètre plus profondément dans l'ébauche de prothèse 2, et usine l'ébauche de prothèse dentaire 2 simultanément par fraisage radial et axial. L'ébauche de prothèse dentaire 2 et l'outil de fraisage 7 se trouvent alors dans la configuration relative illustrée sur la figure 19.

On comprend ainsi que les moyens de guidage 6 sont conformés de telle sorte que, lorsque l'angle de pivotement angulaire de l'axe de fraisage II-II par rapport à l'axe de tenue I-I diminue, la position limite proximale du coulisseau 8 se rapproche de l'axe de tenue I-I et de la surface d'appui axial 5 des moyens de tenue 4.

Après être parvenu dans la configuration illustrée sur la figure 19, le prothésiste retire l'outil de fraisage 7 et obtient l'ébauche de prothèse dentaire 2 telle qu'illustrée sur la figure 2, comportant :
- un premier tronçon de passage 2b s'étendant depuis l'extrémité proximale 2a de ladite ébauche de prothèse dentaire 2 selon un premier axe longitudinal V-V,
- un deuxième tronçon de passage 2c prolongeant en oblique le premier tronçon de passage 2b sensiblement selon un deuxième axe longitudinal VI-VI de telle sorte que les premier 2b et deuxième 2c tronçons de passage forment sensiblement entre eux un angle α non nul (l'angle α est intermédiaire entre les angles Amin et Amax, soit ici d'environ 22,5 degrés).

Sur la figure 2 sont également repérés l'angle minimum Amin (15 degrés) et l'angle maximum Amax (30 degrés) d'orientation de l'outil de fraisage 7 par rapport à l'ébauche de prothèse dentaire 2 ayant permis d'aboutir au deuxième tronçon de passage 2c.

Le procédé d'usinage de l'ébauche de prothèse dentaire 2 par enlèvement de matière à l'aide d'un dispositif 1 selon l'invention, comporte ainsi les étapes suivantes :
a) fixer l'ébauche de prothèse dentaire 2 sur les moyens de tenue 4,
b) adapter sur les moyens de guidage 6 l'outil de fraisage 7 rotatif orienté selon l'axe de fraisage II-II,
c) déplacer l'outil de fraisage 7 en translation selon l'axe de fraisage II-II et faire pivoter l'axe de fraisage II-II.

Dans la description qui précède, il a été décrit un fraisage purement axial (perçage) selon un l'angle maximum Amax suivi d'un déplacement du levier 9 vers l'angle minimum Amin qui procure simultanément un fraisage axial (perçage) et un fraisage radial (avec le côté de l'outil de fraisage 7). On peut toutefois effectuer en alternative un fraisage purement axial (perçage) selon l'angle minimum Amin suivi d'un déplacement du levier 9 vers l'angle maximum Amax qui procure un fraisage seulement radial (avec le côté de l'outil de fraisage 7). Une autre alternative peut consister à effectuer une pluralité de fraisages purement axiaux selon une pluralité d'angles compris entre l'angle minimum Amin et l'angle maximum Amax.

Sur les figures, l'outil de fraisage 7 est distinct (séparé) du dispositif 1, ce qui permet au prothésiste d'utiliser un outil de fraisage 7 déjà en sa possession ou alors d'utiliser un outil de fraisage 7 qu'on lui fournit et qu'il entraîne en rotation avec une pièce à main lui appartenant. En alternative, on peut avoir recours à un outil de fraisage 7 inséparable du dispositif 1, porté par le coulisseau 8, avec une unité motrice (séparable ou non) du dispositif 1.

La présente invention n'est pas limitée aux modes de réalisation qui ont été explicitement décrits, mais elle en inclut les diverses variantes et généralisations contenues dans le domaine des revendications ci-après.

## Revendications

1. 1 - Dispositif (1) d'aide à l'usinage par enlèvement de matière dans une ébauche de prothèse dentaire (2) ayant une extrémité proximale (2a), ledit dispositif (1) comportant :
- un bâti (3),
- des moyens de tenue (4) de l'extrémité proximale (2a) de l'ébauche de prothèse dentaire (2) orientée selon un axe de tenue (I-I), lesdits moyens de tenue (4) comportant une surface d'appui axial (5) destinée à recevoir en appui axial l'extrémité proximale (2a) de l'ébauche de prothèse dentaire (2),
- des moyens de guidage (6) aptes à tenir un outil de fraisage (7) rotatif orienté selon un axe de fraisage (II-II),
dans lequel :
- les moyens de guidage (6) autorisent un déplacement de l'outil de fraisage (7) en translation selon l'axe de fraisage (II-II) au moyen d'un coulisseau (8) déplaçable entre une position distale et au moins une position limite proximale dans laquelle le coulisseau (8) est plus proche de l'axe de tenue (I-I) et de la surface d'appui axial (5) des moyens de tenue (4) qu'en position distale,
- les moyens de guidage (6) autorisent un pivotement angulaire de l'axe de fraisage (II-II) par rapport à l'axe de tenue (I-I),
- les moyens de guidage (6) limitent ledit pivotement angulaire entre un angle maximum (Amax) et un angle minimum (Amin) par rapport à l'axe de tenue (I-I),
- les moyens de guidage (6) sont conformés de telle sorte que, lorsque l'angle de pivotement angulaire de l'axe de fraisage (II-II) par rapport à l'axe de tenue (I-I) diminue, la position limite proximale du coulisseau (8) se rapproche de l'axe de tenue (I-I) et de la surface d'appui axial (5) des moyens de tenue (4).

2. 2 - Dispositif (1) selon la revendication 1, **caractérisé en ce que** :
- les moyens de guidage (6) comportent un levier (9), articulé à pivotement sur le bâti (3) selon un premier axe de pivotement (III-III) , et sur lequel le coulisseau (8) est monté à coulissement,
- les moyens de tenue (4) sont montés à pivotement sur le bâti (3) selon un deuxième axe de pivotement (IV-IV) parallèle au premier axe de pivotement (III-III) mais distinct du premier axe de pivotement (III-III),
- des moyens de blocage (10) permettent d'immobiliser les moyens de tenue (4) par rapport au bâti (3).

3. 3 - Dispositif (1) selon la revendication 2, **caractérisé en ce que** :
- le pivotement angulaire de l'axe de fraisage (II-II) est limité par une première butée (11) fixe du bâti (3) contre laquelle le levier (9) vient en appui selon un angle de pivotement minimum (Amin),
- le pivotement angulaire de l'axe de fraisage (II-II) est limité par une deuxième butée (12) portée par les moyens de tenue (4), excentrée par rapport au deuxième axe de pivotement (IV-IV), et contre laquelle le levier (9) vient en appui selon un angle de pivotement maximum (Amax).

4. 4 - Dispositif (1) selon la revendication 3, **caractérisé en ce que** la deuxième butée (12) est disposée à l'écart du deuxième axe de pivotement (IV-IV) selon une distance (D) inférieure à l'écart (E) entre les premier (III-III) et deuxième (IV-IV) axes de pivotement.

5. 5 - Dispositif (1) selon l'une quelconque des revendications 2 à 4, **caractérisé en ce que** la position limite proximale du coulisseau (8) est définie par une troisième butée (13) portée par les moyens de tenue (4).

6. 6 - Dispositif (1) selon la revendication 5, **caractérisé en ce que** le coulisseau (8) comporte une tige (14) ayant une extrémité libre (14a) destinée à venir porter en appui contre la troisième butée (13) lorsque le coulisseau (8) est en position limite proximale.

7. 7 - Dispositif (1) selon la revendication 6, **caractérisé en ce que** l'extrémité libre (14a) de la tige (14) a un profil en arc de cercle dans un plan (P1) perpendiculaire aux premier (III-III) et deuxième (IV-IV) axes de pivotement.

8. 8 - Dispositif (1) selon la revendication 7, **caractérisé en ce que** la troisième butée (13) comporte une facette (13a) :
- parallèle à l'axe de tenue (I-I),
- parallèle aux premier (III-III) et deuxième (IV-IV) axes de pivotement,
- située à l'écart de l'axe de tenue (I-I) selon une distance (d) égale au rayon de l'arc de cercle du profil de l'extrémité libre (14a) de la tige (14).

9. 9 - Dispositif (1) selon l'une quelconque des revendications 1 à 8, **caractérisé en ce que** des premiers moyens de rappel élastiques (15) sollicitent en permanence les moyens de guidage (6) pour rappeler l'axe de fraisage (II-II) à pivotement vers l'angle de pivotement minimum (Amin) par rapport à l'axe de tenue (I-I).

10. 10 - Dispositif (1) selon l'une quelconque des revendications 1 à 9, **caractérisé en ce que** des deuxièmes moyens de rappel élastiques (16) sollicitent en permanence le coulisseau (8) pour le rappeler vers sa position distale.

11. 11 - Dispositif (1) selon l'une quelconque des revendications 1 à 10, **caractérisé en ce que** les moyens de guidage (6) comprennent un canon de perçage (17) ayant un alésage interne (17a) destiné à recevoir à faible jeu radial l'outil de fraisage (7).

12. 12 - Dispositif (1) selon l'une quelconque des revendications 1 à 11, **caractérisé en ce que** les moyens de tenue (4) comportent en outre une surface d'appui latéral (18), conformée pour recevoir en appui latéral l'ébauche de prothèse dentaire (2), vers et à l'écart de l'axe de tenue (I-I).

13. 13 - Dispositif (1) selon l'une quelconque des revendications 1 à 12, **caractérisé en ce que** les moyens de tenue (4) sont conformés pour autoriser un réglage et un blocage en orientation angulaire de l'ébauche de prothèse (2) autour de l'axe de tenue (I-I).

14. 14 - Dispositif (1) selon l'une quelconque des revendications 1 à 13, **caractérisé en ce que** les moyens de tenue (4) comportent en outre un patin d'appui (21), destiné à venir en appui latéral contre l'ébauche de prothèse (2), ledit patin d'appui (21) étant de préférence sollicité en permanence par des troisièmes moyens de rappel élastiques (22) pour le rappeler vers l'axe de tenue (I-I).

15. 15 - Procédé d'usinage d'une ébauche de prothèse dentaire (2) par enlèvement de matière à l'aide d'un dispositif (1) selon l'une quelconque des revendications 1 à 14, ladite ébauche de prothèse dentaire (2) comportant un premier tronçon de passage (2b) s'étendant depuis une extrémité proximale (2a) de ladite ébauche de prothèse dentaire (2) selon un premier axe longitudinal (V-V), procédé lors duquel :
a) on fixe l'ébauche de prothèse dentaire (2) sur les moyens de tenue (4),
b) on adapte sur les moyens de guidage (6) un outil de fraisage (7) rotatif orienté selon l'axe de fraisage (II-II),
c) on déplace l'outil de fraisage (7) en translation selon l'axe de fraisage (II-II) et on fait pivoter l'axe de fraisage (II-II).

16. 16 - Utilisation d'un dispositif (1) d'aide à l'usinage selon l'une quelconque des revendications 1 à 14 pour l'usinage d'une ébauche de prothèse dentaire (2) par enlèvement de matière, ladite ébauche de prothèse dentaire (2) comportant un premier tronçon de passage (2b) s'étendant depuis une extrémité proximale (2a) de ladite ébauche de prothèse dentaire (2) selon un premier axe longitudinal (V-V), utilisation lors de laquelle on usine dans l'ébauche de prothèse dentaire (2), au moyen d'un outil de fraisage (7), un deuxième tronçon de passage (2c), ledit deuxième tronçon de passage (2c) prolongeant en oblique le premier tronçon de passage (2b) de telle sorte que les premier (2b) et deuxième (2c) tronçons de passage forment entre eux un angle (α) non nul.

## Patentansprüche

1. Vorrichtung (1) zur Unterstützung der Bearbeitung durch Materialabtrag in einem Zahnprothesenrohling (2) mit einem proximalen Ende (2a), wobei besagte Vorrichtung (1) aufweist:
- einen Rahmen (3),
- Haltemittel (4) des proximalen Endes (2a) des Zahnersatzrohlings (2), die entlang einer Halteachse (I-I) orientiert sind, wobei besagte Haltemittel (4) eine axiale Anlagefläche (5) aufweisen, die zur axial anliegenden Aufnahme des proximalen Endes (2a) des Zahnersatzrohlings (2) bestimmt ist,
- Führungsmittel (6), die ein rotierendes Fräswerkzeug (7) halten können, das entlang einer Fräsachse (II-II) orientiert ist,
in welcher:
- die Führungsmittel (6) eine translatorische Bewegung des Fräswerkzeugs (7) entlang der Fräsachse (II-II) mittels eines Schiebers (8) ermöglichen, der zwischen einer distalen Position und mindestens einer proximalen Grenzposition bewegbar ist, in welcher der Schieber (8) näher an der Halteachse (I-I) und an der axialen Anlagefläche (5) des Haltemittels (4) ist als in der distalen Position,
- die Führungsmittel (6) eine Winkelschwenkung der Fräsachse (II-II) relativ zur Halteachse (I-I) ermöglichen,
- die Führungsmittel (6) besagte Winkelschwenkung zwischen einem maximalen Winkel (Aₘₐₓ) und einem minimalen Winkel (Aₘᵢₙ) relativ zur Halteachse (I-I) begrenzen,
- die Führungsmittel (6) so angepasst sind, dass sich bei abnehmendem Winkel der Winkelschwenkung der Fräsachse (II-II) relativ zur Halteachse (I-I) die proximale Grenzposition des Schiebers (8) der Halteachse (I-I) und der axialen Anlagefläche (5) des Haltemittels (4) nähert.

2. Vorrichtung (1) nach Anspruch 1, **dadurch gekennzeichnet, dass**:
- die Führungsmittel (6) einen Hebel (9) aufweisen, der entlang einer ersten Schwenkachse (III-III) schwenkbar am Rahmen (3) angelenkt ist und auf dem der Schieber (8) verschiebbar montiert ist,
- die Haltemittel (4) am Rahmen (3) entlang einer zweiten Schwenkachse (IV-IV) schwenkbar montiert sind, die parallel zur ersten Schwenkachse (III-III), jedoch von der ersten Schwenkachse (III-III) verschieden ist,
- Blockiermittel (10) eine Immobilisierung der Haltemittel (4) relativ zu dem Rahmen (3) ermöglichen.

3. Vorrichtung (1) nach Anspruch 2, **dadurch gekennzeichnet, dass**:
- die Winkelschwenkung der Fräsachse (II-II) durch einen ersten Festanschlag (11) des Rahmens (3) begrenzt ist, gegen den der Hebel (9) bei einem minimalen Schwenkwinkel (Aₘᵢₙ) zur Anlage kommt,
- die Winkelschwenkung der Fräsachse (II-II) durch einen an den Haltemitteln (4) angebrachten zweiten Anschlag (12) begrenzt ist, der exzentrisch relativ zur zweiten Schwenkachse (IV-IV) ist und gegen den der Hebel (9) im maximalen Schwenkwinkel (Aₘₐₓ) zur Anlage kommt.

4. Vorrichtung (1) nach Anspruch 3, **dadurch gekennzeichnet, dass** der zweite Anschlag (12) mit Abstand gemäß einer Distanz (D) zu der zweiten Schwenkachse (IV-IV) angeordnet ist, die kleiner ist als der Abstand (E) zwischen der ersten (III-III) und zweiten (IV-IV) Schwenkachse.

5. Vorrichtung (1) nach einem der Ansprüche 2 bis 4, **dadurch gekennzeichnet, dass** die proximale Grenzposition des Schiebers (8) durch einen dritten Anschlag (13) definiert ist, der an den Haltemitteln (4) angebracht ist.

6. Vorrichtung (1) nach Anspruch 5, **dadurch gekennzeichnet, dass** der Schieber (8) einen Stab (14) mit einem freien Ende (14a) aufweist, der dazu bestimmt ist, gegen den dritten Anschlag (13) zur Anlage zu kommen, wenn sich der Schieber (8) in der proximalen Grenzposition befindet.

7. Vorrichtung (1) nach Anspruch 6, **dadurch gekennzeichnet, dass** das freie Ende (14a) des Stabs (14) in einer Ebene (P1), die senkrecht zur ersten (III-III) und zweiten (IV-IV) Schwenkachse verläuft, ein bogenförmiges Profil hat.

8. Vorrichtung (1) nach Anspruch 7, **dadurch gekennzeichnet, dass** der dritte Anschlag (13) eine Facette (13a) aufweist:
- die parallel zur Halteachse (I-I),
- die parallel zur ersten (III-III) und zweiten (IV-IV) Schwenkachse,
- die von der Halteachse (I-I) mit Abstand gemäß einer Distanz (d) angeordnet ist, die dem Radius des Kreisbogens des Profils des freien Endes (14a) des Stabs (14) entspricht.

9. Vorrichtung (1) nach einem der Ansprüche 1 bis 8, **dadurch gekennzeichnet, dass** erste elastische Rückstellmittel (15) die Führungsmittel (6) permanent spannen, um die schwenkbare Fräsachse (II-II) in Richtung des minimalen Schwenkwinkels (Aₘᵢₙ) relativ zur Halteachse (I-I) zurückzustellen.

10. Vorrichtung (1) nach einem der Ansprüche 1 bis 9, **dadurch gekennzeichnet, dass** zweite elastische Rückstellmittel (16) den Schieber (8) permanent spannen, um ihn in Richtung seiner distalen Position zurückzustellen.

11. Vorrichtung (1) nach einem der Ansprüche 1 bis 10, **dadurch gekennzeichnet, dass** die Führungsmittel (6) eine Bohrbuchse (17) mit einer Innenbohrung (17a) umfassen, die zur Aufnahme des Fräswerkzeugs (7) mit geringem Radialspiel bestimmt ist.

12. Vorrichtung (1) nach einem der Ansprüche 1 bis 11, **dadurch gekennzeichnet, dass** die Haltemittel (4) außerdem eine seitliche Anlagefläche (18) aufweisen, die angepasst ist, dass sie den Zahnprothesenrohling (2) in Richtung und mit Abstand von der Halteachse (I-I) seitlich anliegend aufnimmt.

13. Vorrichtung (1) nach einem der Ansprüche 1 bis 12, **dadurch gekennzeichnet, dass** die Haltemittel (4) angepasst sind, dass sie ein Einstellen und ein Blockieren in Winkelorientierung des Prothesenrohlings (2) um die Halteachse (I-I) ermöglichen.

14. Vorrichtung (1) nach einem der Ansprüche 1 bis 13, **dadurch gekennzeichnet, dass** die Haltemittel (4) außerdem einen Anlageschuh (21) aufweisen, der dazu bestimmt ist, seitlich gegen den Prothesenrohling (2) zur Anlage zu kommen, wobei besagter Anlageschuh (21) vorzugsweise permanent durch dritte elastische Rückstellmittel (22) gespannt ist, um ihn in Richtung der Halteachse (I-I) zurückzustellen.

15. Verfahren zur Bearbeitung eines Zahnprothesenrohlings (2) durch Materialabtrag unter Verwendung einer Vorrichtung (1) nach einem der Ansprüche 1 bis 14, wobei besagter Zahnprothesenrohling (2) einen ersten Durchgangsabschnitt (2b) aufweist, der sich von einem proximalen Ende (2a) des besagten Zahnprothesenrohlings (2) entlang einer ersten Längsachse (V-V) erstreckt, bei welchem Verfahren:
a) der Zahnersatzrohling (2) am Haltemittel (4) fixiert wird,
b) am Führungsmittel (6) ein entlang der Fräsachse (II-II) orientiertes rotierendes Fräswerkzeug (7) montiert ist,
c) das Fräswerkzeug (7) translatorisch entlang der Fräsachse (II-II) bewegt und die Fräsachse (II-II) geschwenkt wird.

16. Verwendung einer Bearbeitungsunterstützungsvorrichtung (1) nach einem der Ansprüche 1 bis 14 zur Bearbeitung eines Zahnprothesenrohlings (2) durch Materialabtrag, wobei besagter Zahnprothesenrohlings (2) einen ersten Durchgangsabschnitt (2b) aufweist, der sich von einem proximalen Ende (2a) besagten Zahnprothesenrohlings (2) entlang einer ersten Längsachse (V-V) erstreckt, wobei mittels eines Fräswerkzeugs (7) eine spanabhebende Bearbeitung des Zahnprothesenrohlings (2) erfolgt, einen zweiten Durchgangsabschnitt (2c), wobei besagter zweite Durchgangsabschnitt (2c) schräg zum ersten Durchgangsabschnitt (2b) verläuft, so dass der erste (2b) und der zweite (2c) Durchgangsabschnitt zwischen sich einen Winkel (α) ungleich Null bilden.

## Claims

1. Device (1) for assistance in the machining, by material removal, of a dental prosthesis blank (2) having a proximal end (2a), said device (1) comprising:
- a frame (3),
- holding means (4) for holding the proximal end (2a) of the dental prosthesis blank (2) oriented along a holding axis (I-I), said holding means (4) comprising an axial bearing surface (5) intended to receive and axially support the proximal end (2a) of the dental prosthesis blank (2),
- guide means (6) for holding a rotary milling tool (7) oriented along a milling axis (II-II),
in which:
- the guide means (6) allow a movement of the milling tool (7) in translation along the milling axis (II-II) by means of a slide (8) movable between a distal position and at least a proximal limit position in which the slide (8) is closer to the holding axis (I-I) and to the axial bearing surface (5) of the holding means (4) than in the distal position,
- the guide means (6) allow angular pivoting of the milling axis (II-II) with respect to the holding axis (I-I),
- the guide means (6) limit said angular pivoting between a maximum angle (Amax) and a minimum angle (Amin) with respect to the holding axis (I-I),
- the guide means (6) are shaped in such a way that, when the angle of angular pivoting of the milling axis (II-II) with respect to the holding axis (I-I) decreases, the proximal limit position of the slide (8) approaches the holding axis (I-I) and the axial bearing surface (5) of the holding means (4).

2. Device (1) according to Claim 1, **characterized in that**:
- the guide means (6) comprise a lever (9), which is articulated pivotably on the frame (3) along a first pivot axis (III-III), and on which the slide (8) is slidably mounted,
- the holding means (4) are mounted pivotably on the frame (3) along a second pivot axis (IV-IV) parallel to the first pivot axis (III-III) but distinct from the first pivot axis (III-III),
- locking means (10) make it possible to immobilize the holding means (4) with respect to the frame (3).

3. Device (1) according to Claim 2, **characterized in that**:
- the angular pivoting of the milling axis (II-II) is limited by a first fixed stop (11) of the frame (3), against which the lever (9) comes to bear at a minimum pivot angle (Amin),
- the angular pivoting of the milling axis (II-II) is limited by a second stop (12) carried by the holding means (4), eccentric with respect to the second pivot axis (IV-IV), and against which the lever (9) comes to bear at a maximum pivot angle (Amax).

4. Device (1) according to Claim 3, **characterized in that** the second stop (12) is arranged away from the second pivot axis (IV-IV) by a distance (D) less than the spacing (E) between the first (III-III) and second (IV-IV) pivot axes.

5. Device (1) according to any one of Claims 2 to 4, **characterized in that** the proximal limit position of the slide (8) is defined by a third stop (13) carried by the holding means (4).

6. Device (1) according to Claim 5, **characterized in that** the slide (8) comprises a rod (14) having a free end (14a) intended to bear against the third stop (13) when the slide (8) is in the proximal limit position.

7. Device (1) according to Claim 6, **characterized in that** the free end (14a) of the rod (14) has a profile in the shape of an arc of a circle in a plane (P1) perpendicular to the first (III-III) and second (IV-IV) pivot axes.

8. Device (1) according to Claim 7, **characterized in that** the third stop (13) comprises a facet (13a):
- parallel to the holding axis (I-I),
- parallel to the first (III-III) and second (IV-IV) pivot axes,
- situated away from the holding axis (I-I) by a distance (d) equal to the radius of the arc of a circle of the profile of the free end (14a) of the rod (14).

9. Device (1) according to any one of Claims 1 to 8, **characterized in that** first elastic return means (15) permanently bias the guide means (6) to return the milling axis (II-II) by pivoting towards the minimum pivoting angle (Amin) with respect to the holding axis (I-I) .

10. Device (1) according to any one of Claims 1 to 9, **characterized in that** second elastic return means (16) permanently bias the slide (8) in order to return it towards its distal position.

11. Device (1) according to any one of Claims 1 to 10, **characterized in that** the guide means (6) comprise a drill bushing (17) having an internal bore (17a) intended to receive the milling tool (7) with a small radial clearance.

12. Device (1) according to any one of Claims 1 to 11, **characterized in that** the holding means (4) further comprise a lateral bearing surface (18), shaped to receive and laterally support the dental prosthesis blank (2), towards and away from the holding axis (I-I) .

13. Device (1) according to any one of Claims 1 to 12, **characterized in that** the holding means (4) are shaped to allow the prosthesis blank (2) to be adjusted and locked in angular orientation about the holding axis (I-I) .

14. Device (1) according to any one of Claims 1 to 13, **characterized in that** the holding means (4) further comprise a bearing pad (21), intended to bear laterally against the prosthesis blank (2), said bearing pad (21) preferably being permanently biased by third elastic return means (22) in order to return it towards the holding axis (I-I).

15. Method of machining a dental prosthesis blank (2) by material removal with the aid of a device (1) according to any one of Claims 1 to 14, said dental prosthesis blank (2) comprising a first passage segment (2b) extending from a proximal end (2a) of said dental prosthesis blank (2) along a first longitudinal axis (V-V), during which method:
a) the dental prosthesis blank (2) is fixed on the holding means (4),
b) a rotary milling tool (7) oriented along the milling axis (II-II) is fitted on the guide means (6) ,
c) the milling tool (7) is moved in translation along the milling axis (II-II), and the milling axis (II-II) is pivoted.

16. Use of a machining assistance device (1) according to any one of Claims 1 to 14 for the machining of a dental prosthesis blank (2) by material removal, said dental prosthesis blank (2) comprising a first passage segment (2b) extending from a proximal end (2a) of said dental prosthesis blank (2) along a first longitudinal axis (V-V), during which use machining is carried out on the dental prosthesis blank (2), by means of a milling tool (7), to form a second passage segment (2c), said second passage segment (2c) continuing the first passage section (2b) obliquely, in such a way that the first (2b) and second (2c) passage segments form between them a non-zero angle (α).
